# EUROPEAN PATENT SPECIFICATION

(11) **EP 2 845 880 B1**
(45) Date of publication and mention of the grant of the patent: **03.04.2019**
(21) Application number: 14182825.1
(22) Date of filing: 29.08.2014
(51) Int. Cl.: C08L 83/04

(54) **ADDITION CURABLE LIQUID SILICONE RUBBER COMPOSITION AND SILICONE RUBBER CURED ARTICLE**
HÄRTBARE FLÜSSIGE SILIKONKAUTSCHUKZUSATZZUSAMMENSETZUNG UND GEHÄRTETER SILIKONKAUTSCHUKARTIKEL
COMPOSITION D'ADDITION DE CAOUTCHOUC DE SILICONE LIQUIDE DURCISSABLE ET ARTICLE DURCI À BASE DE CAOUTCHOUC DE SILICONE

(30) Priority: 05.09.2013 JP 2013183864
(43) Date of publication of application: 11.03.2015
(73) Proprietor: Shin-Etsu Chemical Co., Ltd., Tokyo (JP)
(72) Inventor: Kato, Nobu, Annaka-shi, Gunma (JP)
(74) Representative: Ter Meer Steinmeister & Partner

(56) References cited:
- EP-A2- 0 091 737
- US-A- 5 519 082
- US-A1- 2003 162 875
- US-A1- 2012 232 219

## Description

### TECHNICAL FIELD

The present invention relates to an addition curable liquid silicone rubber composition capable of producing a cured product (silicone rubber) having a high hardness (hardness measured by durometer A of at least 75), and a silicone rubber cured article produced by thermally curing this composition. More particularly, the present invention relates to an addition curable liquid silicone rubber composition capable of producing a silicone rubber which exhibits high elongation (with the elongation at break of at least 300%) despite the high hardness after the curing and which is adapted for food applications, and a silicone rubber cured article produced by thermally curing this composition.

### BACKGROUND ART

Silicone rubbers are widely used in the fields of medicine, foods, crafts, electrical and electronic engineering, automobiles, office equipment, and the like in view of excellent heat resistance, cold resistance, safety, appearance (transparency), texture, and also, durability. Of these silicone rubbers, addition curable silicone rubber compositions are preferred in the field of medicine and foods due to the safety concerns since silicone rubbers of this type are free from byproducts which arise from decomposition of an organic peroxide in the case of the type cured by an organic peroxide. The silicone rubbers used in the food application typically requires a hardness (durometer; type A) of at least 75, an elongation of at least 300%, and a tear strength of at least 8 kN/m. Hardness of the silicone rubber is generally improved by using the inorganic filler at a higher content. However, in this case, the elongation as described above is not realized, and their usage had been limited.

JP-A H07-331079 (Patent document 1) discloses a high elongation, high strength, high hardness rubber produced by filling the silicone raw rubber with a silicone resin and a reinforcement silica. However, there is recently a demand for a liquid silicone rubber adapted for use in injection molding to thereby reduce the time required for molding and produce a molded article having a complicated structure. Use of the method as described above in the case of the liquid silicone rubber, however, had the problem of molding difficulty due to the excessive increase in the viscosity.

JP-A 2006-1953 (Patent document 2) proposes a liquid silicone rubber exhibiting a high hardness and a relatively high elongation ability which is obtained by thermally treating an organopolysiloxane having vinyl group on the side chain with silica. JP-A 2006-1954 (Patent document 3) proposes a silicone rubber having a high hardness and a relatively high elongation ability having a non-functional organopolysiloxane added thereto. However, these silicone rubbers both failed to realize the elongation of at least 300%, and both of these silicone rubbers suffered from the problem of tearing of the molded article in the release of the article from the mold due to the low tear strength.

EP0091737 A2 also discloses a silicone rubber composition with high hardness and mechanical properties.

### Citation List

Patent document 1: JP-A H07-331079
Patent document 2: JP-A 2006-1953
Patent document 3: JP-A 2006-1954

### DISCLOSURE OF INVENTION

The present invention is an attempt to improve the situation as described above, and an object of the present invention is to provide a liquid addition curable silicone rubber composition capable of producing a cured product (silicone rubber) having excellent hardness, elongation, as well as high tensile strength and tear strength. Another object of the present invention is to provide a silicone rubber cured article.

In order to achieve the objects as described above, the inventors of the present invention conducted an intensive study, and found out that a silicone rubber composition which can be cured into a silicone rubber having a high hardness and a high elongation with high tensile strength and tear strength can be realized by combining an alkenyl group-containing organopolysiloxane having a particular chain length (degree of polymerization) which is liquid at room temperature; an alkenyl group-containing silicone resin; and a fumed silica having the surface treated with at least one silica surface treating agent selected from alkenyl group-containing silane and silazane compounds. The present invention has been realized on the basis of such finding.

Accordingly, this invention provides an addition curable liquid silicone rubber composition and a silicone rubber cured article as claimed.
[1] An addition curable silicone rubber composition comprising
   (A) 100 parts by weight of an alkenyl group-containing organopolysiloxane having at least two alkenyl groups bonded to the silicon atoms at the ends of the molecular chain per molecule and having no alkenyl group in the midst of the molecular chain, the alkenyl group-containing organopolysiloxane having a viscosity at 25°C of 30,000 to 200,000 mPa·s,
   (B) 0.1 to 10 parts by weight of a resinous copolymer containing R₃SiO_{1/2} units (wherein R is an optionally substituted monovalent hydrocarbon group) and SiO₂ units wherein molar ratio of the R₃SiO_{1/2} units to the SiO₂ units [R₃SiO_{1/2}SiO₂] is 0.5 to 1.5, and the resinous copolymer containing 5×10⁻³ to 1×10⁻⁴ mol/g of vinyl group,
   (C) 0.2 to 20 parts by weight of an organohydrogenpolysiloxane having at least two hydrogen atoms bonded to the silicon atoms per molecule,
   (D) 30 to 60 parts by weight of a fumed silica having a specific surface area as measured by BET method of at least 130 m²/g,
   (E) 0.01 to 5 parts by weight in relation to 100 parts by weight of the fumed silica (D) of at least one silica surface treating agent selected from silane and silazane compounds having at least one alkenyl group per molecule, and
   (F) a catalytic amount of an addition catalyst; wherein the addition curable silicone rubber composition is capable of producing a silicone rubber cured article having a hardness as measured by a durometer A hardness meter of at least 75, a tear strength of at least 8 kN/m, a tensile strength of at least 3 MPa and an elongation at break of at least 300%.
[2] An addition curable silicone rubber composition according to [1] wherein the component (E) is 1,3-divinyl-1,1,3,3-tetramethyldisilazane.
[3] An addition curable silicone rubber composition according to [1] or [2], further comprising
   (G) 1 to 40 parts by weight of a silica surface treating agent not containing an alkenyl group in relation to 100 parts by weight of the component (D).
[4] An addition curable silicone rubber composition according to any one of [1] to [3], further comprising
   (H) 0.01 to 20 parts by weight in relation to 100 parts by weight of the component (A) of an alkenyl group-containing organopolysiloxane wherein the alkenyl group-containing siloxane unit constitutes 1 to 100% by mole in relation to all siloxane units in the molecule, and the alkenyl group is in the midst of the molecular chain, the alkenyl group-containing organopolysiloxane having a viscosity at 25°C of up to 200,000 mPa·s.
[5] An addition curable silicone rubber composition according to [4] wherein the component (H) is 1,3,5,7-tetramethyl-1,3,5,7-tetravinylcyclotetrasiloxane.
[6] An addition curable silicone rubber composition according to any one of [1] to [5] wherein the viscosity at 25°C is in the range of 50 to 5,000 Pa·s, and the silicone rubber composition is the one for use in liquid injection molding.
[7] A silicone rubber cured article prepared by thermally curing the addition curable silicone rubber composition according to any one of [1] to [7] wherein the silicone rubber cured article has a hardness as measured by durometer A hardness meter of at least 75, a tear strength of at least 8 kN/m, a tensile strength of at least 3 MPa and an elongation at break of at least 300%.

### ADVANTAGEOUS EFFECTS OF INVENTION

The present invention provides a silicone rubber composition which can be cured into a silicone rubber having a high hardness and a high elongation with high tensile strength and tear strength by combining the components (A) to (F) at particular amounts, and in some case, by combining the components (A) to (F), and also, the components (G) and (H) at particular amounts.

### DESCRIPTION OF EMBODIMENTS

Next, the present invention is described in further detail.

### Component (A)

The organopolysiloxane having at least two alkenyl groups bonded to the silicon atoms at the ends of the molecular chain per molecule and having no alkenyl group in the midst of the molecular chain (component (A)) functions as the main ingredient (base polymer) of the present composition, and the organopolysiloxane used may be one or more of those represented by the following average compositional formula (I):

R¹ₐSiO_{(4-a)/2} (I)

wherein R¹ is independently an optionally substituted monovalent hydrocarbon group containing 1 to 10 carbon atoms, and preferably 1 to 8 carbon atoms, wherein a is a positive number in the range of 1.5 to 2.8, preferably 1.8 to 2.5, and more preferably 1.95 to 2.05.

Examples of the optionally substituted monovalent hydrocarbon group bonded to the silicon atom represented by the R¹ include alkyl groups such as methyl group, ethyl group, propyl group, isopropyl group, butyl group, isobutyl group, tert-butyl group, pentyl group, neopentyl group, hexyl group, cyclohexyl group, octyl group, nonyl group, and decyl group; aryl groups such as phenyl group, tolyl group, xylyl group, and naphthyl group; aralkyl groups such as benzyl group, phenylethyl group, and phenylpropyl group; alkenyl groups such as vinyl group, allyl group, propenyl group, isopropenyl group, butenyl group, hexenyl group, cyclohexenyl group, and octenyl group; any of these groups wherein a part or all of the hydrogen atoms have been substituted with a halogen atom such as fluorine, bromine, or chlorine or cyano group, for example, chloromethyl group, chloropropyl group, bromoethyl group, and trifluoropropyl group, and cyanoethyl group. At least 90% of all R¹, and in particular, all R¹ groups excluding the alkenyl group are preferably methyl group.

In addition, at least two (typically 2 to 50), and in particular, about 2 to 20 of the R¹ are an alkenyl group (which is preferably the one containing 2 to 8 carbon atoms, more preferably 2 to 6 carbon atoms, and most preferably vinyl group). This alkenyl group may constitute about 0.05 to 20% by mole, preferably about 0.1 to 10% by mole, and more preferably about 0.1 to 5% by mole of the entire R¹ group.

The content of the alkenyl group is preferably 1.0×10⁻⁶ to 5.0×10⁻⁴ mol/g, and in particular, 1.0×10⁻⁵ to 2.0×10⁻⁴ mol/g in the organopolysiloxane. When the content of the alkenyl group is less than 1.0×10⁻⁶ mol/g, the rubber may suffer from excessively low hardness and become gelated. The content in excess of 5.0×10⁻⁴ mol/g may result in an excessively high crosslinking density, and the resulting rubber may suffer from insufficient elongation ability.

The alkenyl groups in the component (A) are those bonded to the silicon atoms at the ends of the molecular chain, and the component (A) should not contain the alkenyl group bonded to the silicon atom in the midst of the molecular chain (the alkenyl group bonded to the silicon atom not at the end of the molecular chain). Namely, the component (A) should not contain the alkenyl group bonded to the silicon atom in the difunctional diorganosiloxane unit.

Preferably, the structure of the organopolysiloxane is basically a diorganopolysiloxane having a straight chain structure having opposite ends of the molecular chain capped by a triorganosiloxy group (R¹₃SiO_{1/2}) and the backbone comprising a repetition of diorganosiloxane unit (R¹₂SiO_{2/2}). However, the diorganopolysiloxane may partly contain a branched structure having a small amount of branched unit (R¹SiO_{3/2}) or a cyclic structure. Typical such diorganopolysiloxanes include diorganopolysiloxanes having an alkenyl group at opposite ends of the molecular chain such as a diorganopolysiloxane having opposite ends of the molecular chain capped with a diorganoalkenylsiloxy group, a diorganopolysiloxane having opposite ends of the molecular chain capped with an organodialkenylsiloxy group, and a diorganopolysiloxane having opposite ends of the molecular chain capped with a trialkenylsiloxy group (with the proviso that an aliphatic unsaturated group such as an alkenyl group is not included in the organo group).

The alkenyl group-containing organopolysiloxane of the component (A) should have a viscosity at 25°C in the range of 30,000 to 200,000 mPa·s, and in particular, 50,000 to 100,000 mPa·s in view of producing a silicone rubber cured article having the high hardness (hardness measured by durometer A of at least 75) simultaneously with the high elongation (elongation at break of at least 300%). When the viscosity is too low, the resulting silicone rubber cured article will be a rubber with limited elongation, and the silicone rubber exhibiting a high elongation (namely, the elongation at break of at least 300%) will not be obtained. On the other hand, excessively high viscosity will result in the difficulty of molding. In the present invention, the viscosity is generally measured by using a rotary viscometer (such as BL, BH, BS, and cone plate type viscometers).

In order to realize the viscosity within such range of the component (A), the molecular weight (or the degree of polymerization) of the component (A) is typically the one corresponding to an average degree of polymerization (weight average degree of polymerization, hereinafter) of 700 to 2,000, and preferably 750 to 1,100. When the average degree of polymerization is less than 700, the resulting silicone rubber cured article will suffer from insufficient elongation, and the silicone rubber exhibiting the high elongation (namely, the elongation at break of at least 300%) will not be obtained, while the average degree of polymerization in excess of 2,000 results in the unduly high viscosity and difficulty in the molding. In the present invention, the degree of polymerization (or the molecular weight) is typically measured by determining weight average degree of polymerization (or weight average molecular weight) on polystyrene basis by gel permeation chromatography (GPC) using toluene or the like for the developer solvent.

### Component (B)

The resinous copolymer (namely, the so-called silicone resin) of the component (B) is blended in order to impart a high elongation, a high tensile strength, and a high tear strength simultaneously with the high hardness to the cured product of the present composition, and it is a resinous copolymer having a tertiary network (resinous) structure mainly comprising R₃SiO_{1/2} units (monofunctional siloxy units) and SiO₂ units (tetrafunctional siloxane units) wherein R is an optionally substituted monovalent hydrocarbon group containing 1 to 10 carbon atoms, and in particular, 1 to 8 carbon atoms. Exemplary monovalent hydrocarbon groups represented by R include alkyl groups such as methyl group, ethyl group, propyl group, isopropyl group, butyl group, isobutyl group, tert-butyl group, pentyl group, neopentyl group, hexyl group, cyclohexyl group, octyl group, nonyl group, and decyl group; aryl groups such as phenyl group, tolyl group, xylyl group, and naphthyl group; aralkyl groups such as benzyl group, phenylethyl group, and phenylpropyl group; alkenyl groups such as vinyl group, allyl group, propenyl group, isopropenyl group, butenyl group, hexenyl group, cyclohexenyl group, and octenyl group; any of such groups having all or some of hydrogen atoms of the group substituted with a halogen atom such a as fluorine, bromine, or chlorine or cyano group, for example, chloromethyl group, chloropropyl group, bromoethyl group, trifluoropropyl group, and cyanoethyl group.

The resinous copolymer of the component (B) may be the one consisting of the R₃SiO_{1/2} units and the SiO₂ units as described above, or if desired, it may also contain R₂SiO_{2/2} units (difunctional siloxane units) and/or RSiO_{3/2} units (trifunctional siloxane units, wherein R is as defined above) at a total content in the range of up to 50% by weight (0 to 50% by weight), preferably up to 40% by weight (0 to 40% by weight), and more preferably up to 20% by weight (0 to 20% by weight) in relation to the entire copolymer. However, molar ratio of the critical constituents, namely the molar ratio of the R₃SiO_{1/2} units to the SiO₂ units [R₃SiO_{1/2}/SiO₂] should be 0.5 to 1.5, and in particular, 0.5 to 1.3. When this molar ratio is less than 0.5, compatibility with the component (A) will be reduced, and blending will be difficult. The molar ratio in excess of 1.5 will result in the insufficient strength.

The resinous copolymer of the component (B) should contain 5×10⁻³ to 1×10⁻⁴ mol/g, and in particular, 3×10⁻³ to 2×10⁻⁴ mol/g of the vinyl group. The vinyl group content in excess of 5×10⁻³ mol/g results in the brittle rubber, while the content below 1×10⁻⁴ mol/g results in the insufficient strength.

The resinous copolymer may preferably have a weight average molecular weight of about 400 to 100,000, in particular, about 500 to 30,000, and most preferably about 600 to 10,000 in view of stable reinforcement of the rubber. The excessively low weight average molecular weight may result in the insufficiency in the reinforcement effect of the rubber (cured article) while excessively high weight average molecular weight may result in the unstable production.

The resinous copolymer may be typically produced by (co)hydrolytic condensation of an adequate chlorosilane or alkoxysilane by the method known in the art.

The resinous copolymer is incorporated at a content of 0.1 to 10 parts by weight, and in particular, 1 to 10 parts by weight in relation to 100 parts by weight of the component (A). An excessively low content of the resinous copolymer will result in the insufficient reinforcement effect, while the content in excess of 20 parts by weight will result in the excessive hardness of the rubber.

### Component (C)

The component (C) is an organohydrogenpolysiloxane having at least two (typically 2 to 300), preferably at least three (for example, 3 to about 200) hydrogen atoms bonded to the silicon atoms (SiH groups) per molecule, and the SiH groups in the molecule functions as a curing agent for curing the composition by the crosslinking through the hydrosilylation addition reaction of the SiH groups in the molecule with the alkenyl groups bonded to the silicon atoms in the components (A), (B), and (E). The organohydrogenpolysiloxane of the component (C) is represented by the following average compositional formula (II):

R²_{b}H_{c}SiO_{(4-b-c)/2} (II)

wherein R² is independently an optionally substituted monovalent hydrocarbon group containing 1 to 10 carbon atoms, and preferably 1 to 8 carbon atoms; and b and c are positive numbers satisfying that b is 0.7 to 2.1, c is 0.001 to 1.0, and b+c is 0.8 to 3.0. The preferred are those having at least two (typically, 2 to about 300), preferably at least three (for example, 3 to about 200), more preferably 3 to 100, and still more preferably 4 to about 50 hydrogen atoms bonded to the silicon atoms (SiH groups) per molecule.

Examples of the monovalent hydrocarbon group R² in the formula may be those as mentioned above for the R¹, and the preferred are those not having an aliphatic unsaturated group. b is preferably 0.8 to 2.0, c is preferably 0.01 to 1.0, and b+c is preferably 1.0 to 2.5, and the molecular structure of the organohydrogenpolysiloxane may be any of the straight chain, cyclic, branched, or three-dimensional network structures. In this case, the preferred is the one which is liquid at room temperature (25°C) with the number of the silicon atoms per molecule (or the degree of polymerization) being 2 to about 300, and in particular, 4 to about 150. The hydrogen atoms bonded to the silicon atoms may be located either at the end of the molecular chain or in the middle (not at the end) of the molecular chain, or at both of such locations.

Examples of the organohydrogenpolysiloxane of the component (C) include 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, methylhydrogenpolysiloxane having opposite ends capped with trimethylsiloxy group, dimethylsiloxane/methylhydrogensiloxane copolymers having opposite ends capped with trimethylsiloxy group, dimethylpolysiloxane having opposite ends capped with dimethylhydrogensiloxy group, dimethylsiloxane/methylhydrogensiloxane copolymers having opposite ends capped with dimethylhydrogensiloxy group, methylhydrogensiloxane/diphenylsiloxane copolymers having opposite ends capped with trimethylsiloxy group, methylhydrogensiloxane/diphenylsiloxane/dimethylsiloxane copolymers having opposite ends capped with trimethylsiloxy group, methylhydrogensiloxane/methylphenylsiloxane/dimethylsiloxane copolymers having opposite ends capped with trimethylsiloxy group, methylhydrogensiloxane/dimethylsiloxane/diphenylsiloxane copolymers having opposite ends capped with dimethylhydrogensiloxy group, methylhydrogensiloxane/dimethylsiloxane/methylphenylsiloxane copolymers having opposite ends capped with dimethylhydrogensiloxy group, copolymers comprising (CH₃)₂HSiO_{1/2} unit, (CH₃)₃SiO_{1/2} unit, and SiO_{4/2} unit, copolymers comprising (CH₃)₂HSiO_{1/2} unit and SiO_{4/2} unit, copolymers comprising (CH₃)₂HSiO_{1/2} unit, SiO_{4/2} unit, and (C₆H₅)₃SiO_{1/2} unit, and any one of such compound as described above wherein a part or all of the methyl group has been replaced with other alkyl group, phenyl group, or the like.

The proportion of the hydrogen atoms bonded to the silicon atoms (SiH groups) in the organohydrogenpolysiloxane of the component (C) is preferably about 0.001 to 0.017 mol/g, and in particular, about 0.003 to 0.017 mol/g in the component (C). When this proportion is less than 0.001 mol/g, crosslinking may be insufficient, and the proportion in excess of 0.017 mol/g may result in the instability of the organohydrogenpolysiloxane of the component (C).

The organohydrogenpolysiloxane as the component (C) is incorporated at a content of 0.2 to 20 parts by weight, and in particular, at 0.3 to 10 parts by weight in relation to 100 parts by weight of the component (A). The organohydrogenpolysiloxane as the component (C) is also preferably incorporated at a content such that the molar ratio of the hydrogen atoms bonded to the silicon atoms (SiH groups) in the component (C) to the sum of all alkenyl groups bonded to the silicon atoms in the composition, and in particular, the ratio of the hydrogen atoms bonded to the silicon atoms (SiH groups) in the component (C) to the sum of all alkenyl groups bonded to the silicon atoms in the components (A), (B), and (E) [the SiH group/the alkenyl group] is preferably 0.8 to 10.0, and in particular 1.0 to 5.0. When the content of the component (C) (parts by weight) is too low, or the ratio is less than 0.8, the crosslinking will be insufficient, and the resulting rubber will be tacky. On the other hand, an excessively high content of the component (C) (parts by weight), or an excessively high ratio of greater than 10.0 may result in bubble containment in the cured silicone rubber article or difficulty in the mold release.

### Component (D)

The fumed silica of the component (D) is a critical component as a reinforcement silica filler for imparting the cured silicone rubber with a sufficient strength. The fumed silica has a specific surface area as measured by BET method of at least 130 m²/g, typically 130 to 400 m²/g, and preferably 150 to 350 m²/g. A specific surface area of less than 130 m²/g will result not only in the insufficient strength but also in the reduced transparency of the molded article, while the specific surface area in excess of 400 m²/g may result in the difficulty of blending as well as discoloration.

The fumed silica is incorporated at a content of 30 to 60 parts by weight, and preferably 35 to 50 parts by weight in relation to 100 parts by weight of the component (A). The content below 30 parts by weight results in the insufficient rubber hardness while the content in excess of 60 parts by weight invites unduly high viscosity and in such a case, molding cannot be completed.

The fumed silica of the component (D) is used after a surface treatment by at least one silica surface treating agent selected from alkenyl group-containing silane and silazane compounds (E) as described below alone, or by the combination of this component (E) with the silica surface treating agent not containing the alkenyl group (G) as described below. In this case, the fumed silica of the component (D) is preferably used by conducting the surface treatment (in situ treatment) during the preparation of the composition by simultaneously adding the surface treating agent of the component (E) in the preparation of the base compound by kneading the silicone oil (namely, a part or all of the organopolysiloxane of the component (A)) and the component (D). This kneading may be conducted by mixing the ingredients under heating (for example, under the conditions of 120 to 180°C, and in particular, 130 to 170°C for 30 minutes to about 6 hours, and in particular 1 hour to about 4 hours) in the optional presence of a small amount of water.

### Component (E)

Preferable examples of at least one silica surface treating agent selected from silane and silazane compounds having at least one alkenyl group per molecule as the component (E) include organosilazanes (vinyl group-containing disilazanes, trisilazanes, etc.) such as 1,3-divinyl-1,1,3,3-tetramethyldisilazane, 1,1,3,3-tetravinyl-1,3-dimethyldisilazane, 1-vinyl-1,1,3,3,3-pentamethyldisilazane, and 1,1,1,3,5,5,5-heptamethyl-3-vinyltrisilazane; vinyl group-containing aminosilanes such as N,N-dimethylaminodimethylvinylsilane; and vinyl group-containing alkoxysilanes such as trimethoxyvinylsilane, triethoxyvinylsilane, methyldimethoxyvinylsilane, and methoxydimethylvinylsilane. The most preferred are 1,3-divinyl-1,1,3,3-tetramethyl-disilazane and trimethoxyvinylsilane.

At least one silica surface treating agent selected from alkenyl group-containing silane and silazane compounds as the component (E) is incorporated at a content of 0.01 to 5 parts by weight, and in particular, 0.1 to 3 parts by weight in relation to 100 parts by weight of the fumed silica (D). An excessively low content results in the insufficient strength, while a content in excess of 5 parts by weight results in the loss of rubber elasticity.

### Component (F)

Examples of the addition reaction catalyst of the component (F) include known Platinum Group metal catalysts which have been used as a hydrosilylation addition reaction catalyst, for example, platinum catalysts such as platinum black, platinic chloride, chloroplatinic acid, reaction products of chloroplatinic acid and a monohydric alcohol, complex of chloroplatinic acid and an olefin, and platinum bisacetoacetate, palladium catalysts, and rhodium catalysts. The addition catalyst may be incorporated at a catalytic amount, and the addition catalyst is typically used at 0.5 to about 1,000 ppm, and in particular, 1 to about 500 ppm in terms of the weight of the Platinum Group metal in relation to the total weight of the components (A) and (B) combined.

### Component (G)

In the composition of the present invention, a silica surface treating agent not containing an alkenyl group (component (G)) may be used in combination with the component (E) as an optional component which is added as desired. Examples of the silica surface treating agent not containing an alkenyl group of the component (G) include known agents such as alkenyl group-free alkylalkoxysilane, alkylchlorosilane, alkylsilazane such as hexamethyldisilazane, silane coupling agent, titanate silica surface treating agent, and fatty acid ester, which may be used alone or in combination of two or more of such agent at the same or at different timing.

When such silica surface treating agent not containing an alkenyl group (component (G)) is also used, this component may be added at a content of 0 to 50 parts by weight, more preferably 1 to 40 parts by weight, and most preferably 2 to 30 parts by weight in relation to 100 parts by weight of the fumed silica (D). The content in excess of 50 parts by weight may result in the inhibition of the addition reaction and loss of the effect of the rubber reinforcement.

### Component (H)

The composition of the present invention may optionally contain an alkenyl group-containing organopolysiloxane having the alkenyl group in the midst of the molecular chain and having a viscosity at 25°C of up to 200,000 mPa·s (component (H)) as a rubber reinforcement. This component (H) is an alkenyl group-containing organopolysiloxane wherein 1 to 100% by mole of all siloxane units in the molecule are composed of an alkenyl group-containing siloxane unit (for example, a monofunctional siloxy unit such as a trialkenylsiloxy unit, a dialkenylorganosiloxy unit, or an alkenyldiorganosiloxy unit, a difunctional siloxane unit such as an alkenylorganosiloxane unit, a trifunctional siloxane unit such as an alkenylsilsesquioxane unit, or the like), and the component (H) has a viscosity at 25°C of up to 20,000 mPa·s. The component (H) is clearly different from the component (A) in that it critically contains an alkenyl group bonded to the silicon atom in the midst of the molecular chain (not at the end of the molecular chain) (namely, the alkenyl group bonded to the silicon atom in the difunctional diorganosiloxane unit).

The component (H) may be, for example, one or more compounds represented by the average compositional formula (III) :

R³_{d}SiO_{(4-d)/2} (III)

wherein R³ is independently an optionally substituted monovalent hydrocarbon group containing 1 to 10 carbon atoms, and preferably 1 to 8 atoms, and d is a positive number of 1.5 to 2.8, preferably 1.8 to 2.5, and more preferably 1.95 to 2.05.

Examples of the optionally substituted monovalent hydrocarbon group containing 1 to 10 carbon atoms represented by the R³ include alkyl groups such as methyl group, ethyl group, propyl group, isopropyl group, butyl group, isobutyl group, tert-butyl group, pentyl group, neopentyl group, hexyl group, cyclohexyl group, octyl group, nonyl group, and decyl group, aryl groups such as phenyl group, tolyl group, xylyl group, and naphthyl group, aralkyl groups such as benzyl group, phenylethyl group, and phenylpropyl group, alkenyl groups such as vinyl group, allyl group, propenyl group, isopropenyl group, butenyl group, hexenyl group, cyclohexenyl group, and octenyl group, and any one of these groups having some or all of the hydrogen atoms in the group substituted with a halogen atom such as fluorine, bromine, or chlorine or cyano group, for example, chloromethyl group, chloropropyl group, and bromoethyl group, trifluoropropyl group, and cyanoethyl group. Preferably, at least 50% by mole of the all R³, and in particular, all R³ except for the alkenyl group is preferably methyl group.

Of the R³, at least three is preferably an alkenyl group (which is preferably the one containing 2 to 8 carbon atoms, more preferably 2 to 6 carbon atoms, and most preferably vinyl group).

The content of the alkenyl group in the organopolysiloxane is preferably 1.0×10⁻⁴ to 1.5×10⁻² mol/g, and in particular, 2.0×10⁻⁴ to 1.3×10⁻² mol/g as the average of all alkenyl group-containing organopolysiloxane of the component (H) in the composition. When the content of the alkenyl group is less than 1.0×10⁻⁴ mol/g, reinforcement of the rubber may not be realized, and the content in excess of 1.5×10⁻² mol/g may result in the inhibition of the hydrosilylation reaction.

In the component (H), content of the alkenyl group-containing siloxane unit is 1 to 100% by mole, and preferably 3 to 100% by mole of all siloxane units in the molecule in view of improving the rubber hardness and strength.

The alkenyl group-containing organopolysiloxane of the component (H) should be the one containing the alkenyl group bonded to the silicon atom in the midst of the molecular chain (not at the end of the molecular chain) (namely, the alkenyl group bonded to the silicon atom in the difunctional diorganosiloxane unit). However, it does not matter whether the alkenyl group-containing organopolysiloxane of the component (H) does or does not contain an alkenyl group bonded to the silicon atom at the end of the molecular chain.

The structure of the organopolysiloxane may be a cyclic structure, a branched structure, or a straight chain structure.

In the case of the cyclic structure, the molecular weight in terms of the degree of polymerization (or the number of silicon atoms in the molecule) is typically 3 to 10, and exemplary preferable organopolysiloxanes include vinylmethylcyclopolysiloxanes such as 1,3,5,7-tetramethyl-1,3,5,7-tetravinylcyclotetrasiloxane and (vinylmethylsiloxane/dimethylsiloxane) cyclic copolymers in view of the ease of production. In the case of the branched structure or the straight chain structure, the average degree of polymerization (weight average degree of polymerization) is up to 2,000, typically 10 to 1,500, and preferably 30 to 1,000. The average degree of polymerization of less than 10 may result in the insufficient rubbery texture, while the average degree of polymerization in excess of 2,000 will result in an unduly high viscosity and molding difficulty. Examples of the organopolysiloxane having the straight chain structure include straight chain diorganopolysiloxanes containing an alkenyl group as the substituent on the branch of the backbone such as diorganosiloxane/alkenylorganosiloxane copolymers having opposite ends of the molecular chain capped with a triorganosiloxy group, diorganosiloxane/alkenylorganosiloxane copolymers having opposite ends of the molecular chain capped with a diorganoalkenylsiloxy group, diorganosiloxane/alkenylorganosiloxane copolymers having opposite ends of the molecular chain capped with an organodialkenylsiloxy group, diorganosiloxane/alkenylorganosiloxane copolymers having opposite ends of the molecular chain capped with a trialkenylsiloxy group (with the proviso that an aliphatic unsaturated group such as an alkenyl group is not included in the organo group).

The viscosity at 25°C of the alkenyl group-containing organopolysiloxane is not limited for its lower limit as long as it is up to 200,000 mPa·s, and the viscosity is generally at least 0.1 mPa·s.

The component (H) is preferably incorporated at a content of 0.01 to 20 parts by weight, and more preferably 0.1 to 10 parts by weight in relation to 100 parts by weight of the component (A) when the component (H) is used. At a content below such range, the merit of incorporating the component (H) may not necessarily reflected on the physical properties of the rubber while excessively high content may adversely affect the curing speed and the rubber physical properties.

The ratio of hydrogen atoms bonded to the silicon atoms (SiH groups) in the component (C) in relation to the total alkenyl groups bonded to the silicon atoms in the components (A), (B), (E), and (H) in terms of molar ratio (SiH group/alkenyl group) is preferably 0.8 to 10.0, and in particular 1.0 to 5.0. The ratio outside such range may result in the insufficient curing and hence, in the tackiness of the rubber, bubbles trapped in the cured silicone rubber, and difficulty in the release of the article from the mold.

### Other components

Exemplary other optional components include fillers such as precipitated silica, quartz powder, diatomaceous earth, and calcium carbonate; electroconductive agents such as carbon black, electroconductive zinc white, and metal powder; hydrosilylation controlling agent such as nitrogen-containing compound, acetylene compound, phosphorus compound, nitryl compound, carboxylate, tin compound, mercury compound, acetylene compounds such as ethynylcyclohexanol, and sulfur compound; heat resistant agents such as iron oxide and cerium oxide; internal mold release agents such as dimethylsilicone oil; adhesion imparting agent, and thixotropic agent.

The silicone rubber composition of the present invention may be prepared by mixing the components as described above, and the preferred are those which are liquid at room temperature (25°C), and in particular, those having a viscosity of 50 to 5,000 Pa·s, and in particular, 100 to 3,000 Pa·s.

The method used for molding and curing the silicone rubber composition may be those normally used in the art, and the preferable molding method is liquid injection molding. The conditions used for the curing may be heating to 120 to 230°C for 3 seconds to 10 minutes, and more preferably, heating to 150 to 210°C for about 5 seconds to 3 minutes.

In the present invention, the cured article (silicone rubber) obtained by curing the silicone rubber composition is the one having a hardness as measured by durometer A hardness meter of at least 75. When the hardness is less than 75, the silicone rubber will be deformed when it is used for a food container or the like by the load of the content. Such hardness can be realized by blending the components (B) to (F) and the optional component (H) at an adequate ratio.

The silicone rubber has an elongation at break of at least 300%, and in particular, at least 350%, and a tear strength [crescent test piece] of at least 8 kN/m, and in particular, at least 10 kN/m, and a tensile strength of at least 3 MPa, and in particular, at least 5 MPa. When the elongation at break is less than 300%, the rubber will be torn in the course of releasing from the mold, and when the tear strength is less than 8 kN/m or the tensile strength is less than 3 MPa, the rubber may also be torn in the course of releasing from the mold. The properties as described above can be realized by blending the components (A) to (F) at an adequate ratio. It is to be noted that the hardness, the elongation at break, the tear strength, and the tensile strength in the present invention are the values measured in accordance with JIS-K6249.

The silicone rubber of the present invention can be adapted for use in food applications, and in particular, food trays and bakewares (molds for confectioneris).

### EXAMPLES

Next, the present invention is described in further detail by referring to Examples and Comparative Examples, which by no means limit the scope of the present invention. In the following Examples, "part" means "part by weight", and "average degree of polymerization" is the weight average degree of polymerization on polystyrene basis in the analysis by gel permeation chromatography (GPC) using toluene for the developer solvent. The viscosity is the value measured by a rotary viscometer at 25°C.

### Example 1

60 parts of dimethylpolysiloxane (A1) having opposite ends of the molecular chain capped with dimethylvinylsiloxy group having an average degree of polymerization of 1,000 and a viscosity of 90,000 mPa·s, 40 parts of fumed silica having a specific surface area of 300 m²/g (Aerosil 300 manufactured by Nippon Aerosil Co., Ltd.), 6.5 parts of hexamethyldisilazane, 1.5 parts of 1,3-divinyl-1,1,3,3-tetramethyldisilazane, and 2.0 parts of water were mixed at room temperature for 30 minutes, and the mixture was heated to 150°C. After continuously stirring for 3 hours, the mixture was cooled to obtain the silicone rubber base. To 100 parts of this silicone rubber base, 30 parts of dimethylpolysiloxane (A2) having opposite ends of the molecular chain capped with dimethylvinylsiloxy group having an average degree of polymerization of 750 and a viscosity of 30,000 mPa·s, 0.5 part of 1,3,5,7-tetramethyl-1,3,5,7-tetravinylcyclotetrasiloxane (H1), and 5 parts of resinous copolymer (B1) comprising (CH₃)₃SiO_{1/2} unit, CH₂=CH(CH₃)₂SiO_{1/2} unit, and SiO₂ unit having a molar ratio of [(CH₃)₃SiO_{1/2} unit + CH₂=CH(CH₃)₂SiO_{1/2} unit]/SiO₂ unit of 0.90, a vinyl group content of 0.0008 mol/g, and a weight average molecular weight of 2,200 were added, and 3.75 parts of methylhydrogenpolysiloxane (C1) having opposite ends of the molecular chain capped with trimethylsiloxy group and having SiH group on the side chain (dimethylsiloxane/methylhydrogensiloxane copolymer having opposite ends capped with trimethylsiloxy group having a degree of polymerization of 68 and a SiH group content of 0.011 mol/g of) [SiH group in the methylhydrogenpolysiloxane / all alkenyl groups in the composition = 1.4 (mole/mole)] as a crosslinking agent, and 0.05 part of ethynylcyclohexanol as a reaction controlling agent were also added. After continuously stirring for 15 minutes, a silicone rubber composition [having a viscosity as measured at 25°C using a BS-type viscometer with No. 7 rotor at 2 rpm of 1,800 Pa·s] was obtained.

To this silicone rubber composition, 0.1 part of platinum catalyst (Pt concentration, 1% by weight) was added, and the composition was subjected to press curing at 150°C/5 minutes, and then to post curing in an oven at 150°C for 1 hour. The cured article was measured for its hardness, tensile strength, elongation at break, and tear strength (crescent test piece) according to JIS-K6249. The results are shown in Table 1.

### Example 2

65 parts of the dimethylpolysiloxane (A1) used in Example 1, 40 parts of fumed silica having a specific surface area of 300 m²/g (Aerosil 300 manufactured by Nippon Aerosil Co., Ltd.), 6.5 parts of hexamethyldisilazane, 1.5 parts of 1,3-divinyl-1,1,3,3-tetramethyldisilazane, and 2.0 parts of water were mixed at room temperature for 30 minutes, and the mixture was heated to 150°C. After continuously stirring for 3 hours, the mixture was cooled to obtain the silicone rubber base. To 105 parts of this silicone rubber base, 30 parts of dimethylpolysiloxane (A2) having opposite ends of the molecular chain capped with dimethylvinylsiloxy group having an average degree of polymerization of 750 and a viscosity of 30,000 mPa·s, 5 parts of dimethylpolysiloxane having opposite ends of the molecular chain capped with trimethylsiloxy group and having 5% by mole of the methyl group (side chain substituent) substituted with vinyl group, and having an average degree of polymerization of 200 (namely, dimethylsiloxane/vinylmethylsiloxane copolymer having opposite ends capped with trimethylsiloxy group; wherein vinylmethylsiloxane unit constitutes 10% by mole and dimethylsiloxane unit constitutes 90% by mole of all of the diorganopolysiloxane unit constituting the backbone; the copolymer having an average degree of polymerization of 200 and a viscosity of 1,000 mPa·s) (H2), and 2.5 parts of resinous copolymer (B1) of Example 1 were added, and 4.0 parts of (C1) of Example 1 as a crosslinking agent [SiH group in the methylhydrogenpolysiloxane / all alkenyl groups in the composition = 1.5 (mole/mole)] and 0.05 part of ethynylcyclohexanol as a reaction controlling agent were also added. After continuously stirring for 15 minutes, a silicone rubber composition [having a viscosity as measured at 25°C using a BS-type viscometer with No. 7 rotor at 2 rpm of 1,600 Pa·s] was obtained.

To this silicone rubber composition, 0.1 part of platinum catalyst (Pt concentration, 1% by weight) was added, and the composition was subjected to press curing at 150°C/5 minutes, and then to post curing in an oven at 150°C for 1 hour. The cured article was measured for its hardness, tensile strength, elongation at break, and tear strength (crescent test piece) according to JIS-K6249. The results are shown in Table 1.

### Comparative Example 1

60 parts of dimethylpolysiloxane (A3) having opposite ends of the molecular chain capped with dimethylvinylsiloxy group having an average degree of polymerization of 500 and a viscosity of 10,000 mPa·s, 40 parts of fumed silica having a specific surface area of 300 m²/g (Aerosil 300 manufactured by Nippon Aerosil Co., Ltd.), 6.5 parts of hexamethyldisilazane, 1.5 parts of 1,3-divinyl-1,1,3,3-tetramethyldisilazane, and 2.0 parts of water were mixed at room temperature for 30 minutes, and the mixture was heated to 150°C. After continuously stirring for 3 hours, the mixture was cooled to obtain the silicone rubber base. To 100 parts of this silicone rubber base, 25 parts of the dimethylpolysiloxane (A3) was added, and after continuous stirring for 30 minutes, 0.5 part of 1,3,5,7-tetramethyl-1,3,5,7-tetravinylcyclotetrasiloxane (H1) and 5 parts of resinous copolymer (B1) of Example 1 were added. 4.2 parts of methylhydrogenpolysiloxane (C1) of Example 1 (degree of polymerization, 68; SiH group content, 0.011 mol/g) [SiH group in the methylhydrogenpolysiloxane / all alkenyl groups in the composition = 1.5 (mole/mole)] as a crosslinking agent and 0.05 part of ethynylcyclohexanol as a reaction controlling agent were also added. After continuously stirring for 15 minutes, a silicone rubber composition [having a viscosity as measured at 25°C using a BS-type viscometer with No. 7 rotor at 2 rpm of 1,200 Pa·s] was obtained.

To this silicone rubber composition, 0.1 part of platinum catalyst (Pt concentration, 1% by weight) was added, and the composition was subjected to press curing at 150°C/5 minutes, and then to post curing in an oven at 150°C for 1 hour. The cured article was measured for its hardness, tensile strength, elongation at break, and tear strength (crescent test piece) according to JIS-K6249. The results are shown in Table 1.

### Comparative Example 2

65 parts of the dimethylpolysiloxane (A1) used in Example 1, 40 parts of fumed silica having a specific surface area of 300 m²/g (Aerosil 300 manufactured by Nippon Aerosil Co., Ltd.), 6.5 parts of hexamethyldisilazane, 1.5 parts of 1,3-divinyl-1,1,3,3-tetramethyldisilazane, and 2.0 parts of water were mixed at room temperature for 30 minutes, and the mixture was heated to 150°C. After continuously stirring for 3 hours, the mixture was cooled to obtain the silicone rubber base. To 105 parts of this silicone rubber base, 30 parts of dimethylpolysiloxane (A2) having opposite ends of the molecular chain capped with dimethylvinylsiloxy group having an average degree of polymerization of 750 and a viscosity of 30,000 mPa·s, and 10 parts of dimethylpolysiloxane having opposite ends capped with trimethylsiloxy group and having 5% by mole of the methyl group (side chain substituent) substituted with vinyl group, and having an average degree of polymerization of 200 and a viscosity of 1,000 mPa·s of Example 2 (H2) were added, and 4.9 parts of (C1) of Example 1 as a crosslinking agent [SiH group in the methylhydrogenpolysiloxane / all alkenyl groups in the composition = 1.5 (mole/mole)] and 0.05 part of ethynylcyclohexanol as a reaction controlling agent were also added. After continuously stirring for 15 minutes, a silicone rubber composition [having a viscosity as measured at 25°C using a BS-type viscometer with No. 7 rotor at 2 rpm of 1,400 Pa·s] was obtained.

To this silicone rubber composition, 0.1 part of platinum catalyst (Pt concentration, 1% by weight) was added, and the composition was subjected to press curing at 150°C/5 minutes, and then to post curing in an oven at 150°C for 1 hour. The cured article was measured for its hardness, tensile strength, elongation at break, and tear strength (crescent test piece) according to JIS-K6249. The results are shown in Table 1.

### Comparative Example 3

65 parts of the dimethylpolysiloxane (A1) used in Example 1, 40 parts of fumed silica having a specific surface area of 300 m²/g (Aerosil 300 manufactured by Nippon Aerosil Co., Ltd.), 8.0 parts of hexamethyldisilazane, and 2.0 parts of water were mixed at room temperature for 30 minutes, and the mixture was heated to 150°C. After continuously stirring for 3 hours, the mixture was cooled to obtain the silicone rubber base. To 105 parts of this silicone rubber base, 30 parts of dimethylpolysiloxane (A2) having opposite ends of the molecular chain capped with dimethylvinylsiloxy group having an average degree of polymerization of 750 and a viscosity of 30,000 mPa·s, 10 parts of dimethylsiloxane having opposite ends of the molecular chain capped with trimethylsiloxy group and having 5% by mole of the methyl group (side chain substituent) substituted with vinyl group, and having an average degree of polymerization of 200 of Example 2 (H2), and 5 parts of resinous copolymer (B1) of Example 1 were added, and 3.37 parts of (C1) of Example 1 as a crosslinking agent [SiH group in the methylhydrogenpolysiloxane / all alkenyl groups in the composition = 1.8 (mole/mole)] and 0.05 part of ethynylcyclohexanol as a reaction controlling agent were also added. After continuously stirring for 15 minutes, a silicone rubber composition [having a viscosity as measured at 25°C using a BS-type viscometer with No. 7 rotor at 2 rpm of 1,200 Pa·s] was obtained.

To this silicone rubber composition, 0.1 part of platinum catalyst (Pt concentration, 1% by weight) was added, and the composition was subjected to press curing at 150°C/5 minutes, and then to post curing in an oven at 150°C for 1 hour. The cured article was measured for its hardness, tensile strength, elongation at break, and tear strength (crescent test piece) according to JIS-K6249. The results are shown in Table 1.

**Table 1**

| | Example | | Comparative Example | | |
|---|---|---|---|---|---|
| | 1 | 2 | 1 | 2 | 3 |
| Hardness (Durometer A) | 78 | 80 | 80 | 81 | 76 |
| Tensile strength (MPa) | 8.7 | 10.1 | 7.5 | 6.2 | 6.8 |
| Elongation at breakage (%) | 440 | 410 | 200 | 170 | 150 |
| Tear strength (kN/m) | 29 | 10 | 5 | 6 | 3 |

## Claims

1. An addition curable silicone rubber composition comprising
(A) 100 parts by weight of an alkenyl group-containing organopolysiloxane having at least two alkenyl groups bonded to the silicon atoms at the ends of the molecular chain per molecule and having no alkenyl group in the midst of the molecular chain, the alkenyl group-containing organopolysiloxane having a viscosity at 25°C of 30,000 to 200,000 mPa·s, measured using a rotary viscometer,
(B) 0.1 to 10 parts by weight of a resinous copolymer containing R₃SiO_{1/2} units (wherein R is an optionally substituted monovalent hydrocarbon group) and SiO₂ units wherein molar ratio of the R₃SiO_{1/2} units to the SiO₂ units [R₃SiO_{1/2}/SiO₂] is 0.5 to 1.5, and the resinous copolymer containing 5×10⁻³ to 1×10⁻⁴ mol/g of vinyl group,
(C) 0.2 to 20 parts by weight of an organohydrogenpolysiloxane having at least two hydrogen atoms bonded to the silicon atoms per molecule,
(D) 30 to 60 parts by weight of a fumed silica having a specific surface area as measured by BET method of at least 130 m²/g,
(E) 0.01 to 5 parts by weight in relation to 100 parts by weight of the fumed silica (D) of at least one silica surface treating agent selected from silane and silazane compounds having at least one alkenyl group per molecule, and
(F) a catalytic amount of an addition catalyst;
wherein the addition curable silicone rubber composition is capable of producing a silicone rubber cured article having a hardness as measured by a durometer A hardness meter of at least 75, an elongation at break of at least 300%, a tear strength of at least 8 kN/m, and a tensile strength of at least 3 MPa, which are values measured in accordance with JIS-K6249.

2. An addition curable silicone rubber composition according to claim 1 wherein the component (E) is 1,3-divinyl-1,1,3,3-tetramethyldisilazane.

3. An addition curable silicone rubber composition according to claim 1 or 2, further comprising
(G) 1 to 40 parts by weight of a silica surface treating agent not containing an alkenyl group in relation to 100 parts by weight of the component (D).

4. An addition curable silicone rubber composition according to any one of claims 1 to 3, further comprising
(H) 0.01 to 20 parts by weight in relation to 100 parts by weight of the component (A) of an alkenyl group-containing organopolysiloxane wherein the alkenyl group-containing siloxane unit constitutes 1 to 100% by mole in relation to all siloxane units in the molecule, and the alkenyl group is in the midst of the molecular chain, the alkenyl group-containing organopolysiloxane having a viscosity at 25°C of up to 200,000 mPa·s, measured using a rotary viscometer.

5. An addition curable silicone rubber composition according to claim 4 wherein the component (H) is 1,3,5,7-tetramethyl-1,3,5,7-tetravinylcyclotetrasiloxane.

6. An addition curable silicone rubber composition according to any one of claims 1 to 5 wherein the viscosity at 25°C is in the range of 50 to 5,000 Pa·s, measured using a rotary viscometer, and the silicone rubber composition is the one for use in liquid injection molding.

7. A silicone rubber cured article prepared by thermally curing the addition curable silicone rubber composition according to any one of claims 1 to 6,
wherein the addition curable silicone rubber composition is capable of producing a silicone rubber cured article having a hardness as measured by a durometer A hardness meter of at least 75, an elongation at break of at least 300%, a tear strength of at least 8 kN/m, and a tensile strength of at least 3 MPa, which are values measured in accordance with JIS-K6249.

## Patentansprüche

1. Additionshärtbare Siliconkautschukzusammensetzung, umfassend
(A) 100 Gewichtsteile eines alkenylgruppenhaltigen Organopolysiloxans, das mindestens zwei Alkenylgruppen an die Siliciumatome an den Enden der Molekülkette pro Molekül gebunden hat und keine Alkenylgruppe in der Mitte der Molekülkette aufweist, wobei das alkenylgruppenhaltigen Organopolysiloxan eine Viskosität bei 25°C von 30.000 bis 200.000 mPa·s besitzt, gemessen unter Verwendung eines Rotationsviskosimeters,
(B) 0,1 bis 10 Gewichtsteile eines harzartigen Copolymers, enthaltend R₃SiO_{1/2}-Einheiten (worin R eine wahlweise substituierte, einwertige Kohlenwasserstoffgruppe ist) und SiO₂-Einheiten, worin das Molverhältnis der R₃SiO_{1/2}-Einheiten zu den SiO₂-Einheiten [R₃SiO_{1/2}/SiO₂] 0,5 bis 1,5 beträgt, und das harzartige Copolymer 5x10⁻³ bis 1x10⁻⁴ mol/g Vinylgruppe enthält,
(C) 0,2 bis 20 Gewichtsteile eines Organohydrogenpolysiloxans, das mindestens zwei Wasserstoffatome an die Siliciumatome pro Molekül gebunden hat,
(D) 30 bis 60 Gewichtsteile pyrogene Kieselsäure mit einer spezifischen Oberfläche, gemessen durch BET-Methode, von mindestens 130 m²/g,
(E) 0,01 bis 5 Gewichtsteile, bezogen auf 100 Gewichtsteile der pyrogenen Kieselsäure (D), mindestens eines Silica-Oberflächenbehandlungsmittels, gewählt aus Silan- und Silazanverbindungen mit mindestens einer Alkenylgruppe pro Molekül, und
(F) eine katalytische Menge eines Additionskatalysators;
wobei die additionshärtbare Siliconkautschukzusammensetzung in der Lage ist, einen gehärteten Siliconkautschukartikel zu erzeugen mit einer Härte, gemessen durch ein Durometer A-Härte-Messgerät von mindestens 75, einer Bruchdehnung von mindestens 300%, einer Reißfestigkeit von mindestens 8 kN/m, und einer Zugfestigkeit von mindestens 3 MPa, welche Werte gemäß JIS-K6249 gemessen werden.

2. Additionshärtbare Siliconkautschukzusammensetzung nach Anspruch 1, wobei die Komponente (E) 1,3-Divinyl-1,1,3,3-tetramethyldisilazan ist.

3. Additionshärtbare Siliconkautschukzusammensetzung nach Anspruch 1 oder 2, weiterhin umfassend
(G) 1 bis 40 Gewichtsteile eines Silica-Oberflächenbehandlungsmittels, das keine Alkenylgruppe enthält, bezogen auf 100 Gewichtsteile der Komponente (D).

4. Additionshärtbare Siliconkautschukzusammensetzung nach irgendeinem der Ansprüche 1 bis 3, weiterhin umfassend
(H) 0,01 bis 20 Gewichtsteile, bezogen auf 100 Gewichtsteile der Komponente (A) eines alkenylgruppenhaltigen Organopolysiloxans, wobei die alkenylgruppenhaltige Siloxaneinheit 1 bis 100 Mol% ausmacht, bezogen auf sämtliche Siloxaneinheiten in dem Molekül, und die Alkenylgruppe in der Mitte der Molekülkette ist, wobei das alkenylgruppenhaltige Organopolysiloxan eine Viskosität bei 25°C von bis zu 200.000 mPa·s aufweist, gemessen unter Verwendung eines Rotationsviskosimeters.

5. Additionshärtbare Siliconkautschukzusammensetzung nach Anspruch 4, wobei die Komponente (H) 1,3,5,7-Tetramethyl-1,3,5,7-tetravinylcyclotetrasiloxan ist.

6. Additionshärtbare Siliconkautschukzusammensetzung nach irgendeinem der Ansprüche 1 bis 5, wobei die Viskosität bei 25°C im Bereich von 50 bis 5.000 Pa·s liegt, gemessen unter Verwendung eines Rotationsviskosimeters, und die Siliconkautschukzusammensetzung eine zur Verwendung beim Flüssigspritzguss ist.

7. Gehärteter Siliconkautschukartikel, hergestellt durch thermisches Härten der additionshärtbaren Siliconkautschukzusammensetzung nach irgendeinem der Ansprüche 1 bis 6, wobei die additionshärtbare Siliconkautschukzusammensetzung in der Lage ist, einen gehärteten Siliconkautschukartikel zu erzeugen mit einer Härte, gemessen durch ein Durometer A-Härte-Messgerät, von mindestens 75, einer Bruchdehnung von mindestens 300%, einer Zugfestigkeit von mindestens 8 kN/m, und einer Reißfestigkeit von mindestens 3 MPa, welche Werte gemäß JIS-K6249 gemessen werden.

## Revendications

1. Une composition de caoutchouc de silicone durcissable par addition comprenant
(A) 100 parties en poids d'un organopolysiloxane contenant un groupe alcényle ayant au moins deux groupes alcényle liés aux atomes de silicium aux extrémités de la chaîne moléculaire par molécule et ne comportant pas de groupe alcényle au milieu la chaîne moléculaire, l'organopolysiloxane contenant un groupe alcényle ayant une viscosité à 25 °C de 30.000 à 200-000 mPa · s, mesuré en utilisant un viscosimètre rotatif,
(B) 0,1 à 10 parties en poids d'un copolymère résineux contenant des unités R₃SiO_{1/2} (où R est un groupe hydrocarboné monovalent éventuellement substitué) et des unités SiO₂ dans laquelle le rapport molaire des unités R₃SiO_{1/2} aux unités SiO₂ [R₃SiO_{1/2} / SiO₂] est de 0,5 et 1,5, et le copolymère résineux contenant de 5 × 10⁻³ à 1 × 10⁻⁴ mol / g de groupe vinyle,
(C) 0,2 à 20 parties en poids d'un organohydrogénopolysiloxane ayant au moins deux atomes d'hydrogène liés aux atomes de silicium par molécule,
(D) 30 à 60 parties en poids d'une silice de combustion ayant une surface spécifique mesurée par la méthode BET d'au moins st 130 m² / g,
(E) 0,01 à 5 parties en poids pour 100 parties en poids de la silice fumée (D) d'au moins un agent de traitement de surface de la silice choisi parmi les composés silane et silazane ayant au moins un un groupe alcényle par molécule, et
(F) une quantité catalytique d'un catalyseur d'addition,
dans laquelle la composition de caoutchouc de silicone durcissable par addition est capable de produire un article durci en caoutchouc de silicone ayant une dureté mesurée par un duromètre A mètre de dureté d'au moins 75 et un allongement à la rupture d'au moins 300%, une résistance à la déchirure d'au moins 8 kN / m, et une résistance à la traction d'au moins 3 MPa, qui sont des valeurs mesurées en accord avec JIS-K6249.

2. Une composition de caoutchouc de silicone durcissable par addition selon la revendication 1, dans laquelle le composant (E) est le 1,3-divinyl-1,1,3,3-tétraméthyldisilazane.

3. Une composition de caoutchouc de silicone durcissable par addition selon la revendication 1 ou 2, comprenant en outre
(G) 1 à 40 parties en poids d'un agent de traitement de surface à la silice ne contenant pas de groupe alcényle pour 100 parties en poids du composant (D).

4. Une composition de caoutchouc de silicone durcissable par addition selon l'une quelconque des revendications 1 à 3, comprenant en outre
(H) 0,01 à 20 parties en poids par rapport à 100 parties en poids du composant (A) d'un organopolysiloxane contenant un groupe alcényle, dans laquelle l'unité siloxane contenant un groupe d'alcényle représente 1 à 100% en moles de toutes les unités siloxane de la molécule, et le groupe alcényle se situe au milieu de la chaîne moléculaire, l'organopolysiloxane contenant un groupe alcényle ayant une viscosité à 25 °C allant jusqu'à 200.000 mPa · s, mesurée en utilisant un viscosimètre rotatif.

5. Une composition de caoutchouc de silicone durcissable par addition selon la revendication 4, dans laquelle le composant (H) est le 1,3,5,7-tétraméthyl-1,3,5,7-tétravinylcyclotétrasiloxane.

6. Une composition de caoutchouc de silicone durcissable par addition selon l'une quelconque des revendications 1 à 5, dans laquelle la viscosité à 25 °C est comprise dans l'intervalle de 50 à 5.000 Pa · s et la composition de caoutchouc de silicone est celle pour usage dans le moulage par injection de liquide.

7. Un article durci en caoutchouc de silicone préparé en durcissant thermiquement la composition de caoutchouc de silicone durcissable par addition selon l'une quelconque des revendications 1 à 6,
dans lequel la composition de caoutchouc de silicone durcie sable par addition est capable de produire un article durci en caoutchouc de silicone ayant une dureté telle que mesurée par le duromètre A mètre de dureté d'au moins 75, un allongement à la rupture au moins 300%, une résistance à la déchirure d'au moins 8 kN / m, et une résistance à la traction d'au moins 3 MPa, qui sont des valeurs mesurées en accord avec JIS-K6249.
